## Europäisches Patentamt

## European Patent Office

## Office européen des brevets

(19)

(11) Veröffentlichungsnummer: **0 214 427**
**B1**

# EUROPÄISCHE PATENTSCHRIFT

(12)

(45) Veröffentlichungstag der Patentschrift:
**11.07.90**

(21) Anmeldenummer: **86110144.2**

(22) Anmeldetag: **23.07.86**

(51) Int. Cl.⁵: **A01N 63/00**
// (A01N63/00, 57:32, 57:30,
57:16, 57:14, 57:12)

(54) **Nematizide Mittel.**

(30) Priorität: **26.07.85  CH 3243/85**

(43) Veröffentlichungstag der Anmeldung:
**18.03.87 Patentblatt 87/12**

(45) Bekanntmachung des Hinweises auf die Patenterteilung:
**11.07.90 Patentblatt 90/28**

(84) Benannte Vertragsstaaten:
**AT BE CH DE FR GB IT LI LU NL**

(73) Patentinhaber: **CIBA-GEIGY AG, Klybeckstrasse 141,
CH-4002 Basel(CH)**

(72) Erfinder: **Nordmeyer, Dieter, Dr., Engerfeldstrasse 7,
CH-4310 Rheinfelden(CH)**

(74) Vertreter: **Zumstein, Fritz, Dr. et al, Bräuhausstrasse 4,
D-8000 München 2(DE)**

(56) Entgegenhaltungen:
BIOLOGICAL ABSTRACTS/RRM, Nr. 30064211,
Biosciences Information Service, Philadelphia, US; S.M.
BROWN et al.: "Synergistic reduction in root galling by
meloidogyne-javanica with pasteuria-penetrans and
nematicides", & REV NEMATOL. 1985. Band 8, Nr. 3,
Seiten 285,286 000
BIOLOGICAL ABSTRACTS, Band 72, Nr. 1, 1981,
Seite 576, Zusammenfassung Nr. 5527; G.R. STIRLING
et al.: "Mass production of Bacillus penetrans for the
biological control of root-knot
nematodes(Meloidogyne)", &
NEMATOLOGICA 26(3): 308-312. 1980
BIOLOGICAL ABSTRACTS, Band 80, Nr. 11, 1985, Seite
AB-39, Zusammenfassung Nr. 92021; R.M. SAYRE et al.:
"Pasteuria penetrans, new species new combination
revived name, a mycelial and endospore-forming

(56) Entgegenhaltungen: (Fortsetzung)
bacterium parasitic in plant-parasitic nematodes", &
PROC. HELMINTHOL. SOC. WASH. 52(2): 149-165. 1985
000

Die Akte enthält technische Angaben, die nach dem
Eingang der Anmeldung eingereicht wurden und die
nicht in dieser Patentschrift enthalten sind.

## Beschreibung

Die vorliegende Anmeldung betrifft chemisch-biologische Mischungen zur Bekämpfung von Pflanzennematoden, die Anwendung dieser Mischungen und Verfahren zu ihrer Herstellung.

Unter den im Boden befindlichen Nematoden sind die Wurzelgallen-Nematoden und die Zysten-Nematoden (Heterodera) die für die Pflanzenkulturen gefährlichsten Arten. Neben Begasungsmitteln auf Basis kurzkettiger Halogenkohlenwasserstoffe haben seit längerer Zeit Carbamate und Phosphorsäureester ihren Platz als Standard-Nematizide behauptet, obgleich ihre undifferenzierte Breitenwirkung auf die Mikroflora im Boden bedenklich ist und ihre in der Regel hohe Warmblütertoxizität für die Applikationstechnik besondere Sicherheitsvorkehrungen erfordert.

Es ist daher eine stehende Forderung, die Aufwandmengen von nematizid wirkenden Stoffen bei Bodenbehandlungen zu senken. Dabei soll selbstverständlich ein genügender Schutzeffekt an den Pflanzen gewährleistet bleiben. Befriedigende Lösungen sind in dieser Richtung aber bisher nicht erzielt worden.

Weiterhin sind gegen Nematoden auch biologische Bekämpfungsmethoden vorgeschlagen worden, beispielsweise durch Einsatz von Mikroorganismen.

Pasteuria penetrans ist ein bodenbewohnender Mikroorgansimus bakterieller Natur. Er ist ein Parasit an phytopathogenen Nematoden und kann bei Boden-Applikation solche Schäden an Kulturpflanzen reduzieren, die durch Wurzelgallen-Nematoden hervorgerufen werden. Das infektiöse Stadium des Bakteriums ist die unbewegliche Spore im Boden, die sich an der Kutikula eines in der Nähe befindlichen Nematoden anheften kann. Bei einer grösseren Anzahl anhaftender Sporen kann das Eindrigen des Nematoden in die Wirtswurzel verhindert werden. Nimmt der Nematode Nahrung auf, keimen die Sporen und können den Nematoden vor der Eibildung abtöten.

P. penetrans kann in vivo in Nematoden in Gegenwart ihrer Wirtspflanzen kultiviert werden. Die Pflanzenteile können dann zusammen mit Nematoden und Sporen von P. penetrans getrocknet und zu einem groben Pulver vermahlen werden. Dieses getrocknete Inoculum lässt sich so in einen Kulturboden einmischen, dass die betroffenen Bereiche kaum von Nematoden verseucht werden. Der Nachteil dieser biologischen Methode besteht in der begrenzten Applikationsmöglichkeit und kommt bisher nur für Gewächshäuser im kleinen Rahmen an Spezialkulturen in Frage. Eine wirtschaftliche Bedeutung hat diese biologische Bekämpfungsmethode nicht erlangt.

Gegenstand vorliegender Erfindung sind Mittel bestehend aus einer Kombination von

a) Pasteuria penetrans-Sporen, und

b) einer nematizid wirkenden Organophosphor-Verbindung (=OP), ausgewählt aus der Gruppe:

Ethoprophos = O-Ethyl-S,S-dipropylphosphorodithioat,

Dichlofenthion = O,O-Diethyl-O-(2,4-dichlorphenyl)-thionophosphat,

Diamidafos = O-Phenyl-N,N'-dimethylphosphorsäure-diamid,

Fenamiphos = O-Ethyl-O-(3-methyl-4-methylthiophenyl)-N-isopropyl-phosphorsäureamid,

Fensulfothion = O,O-Diethyl-O-(4-methylsulfinylphenyl)-thiophosphat,

Fosthietan = O,O-Diethyl-N-1,3-dithietan-2-yliden-phosphorsäureamid,

Isazofos = O-(5-Chloro-1-isopropyl-1H-1,2,4-triazol-3-yl)-O,O-diethylphosphorothioat, oder

Thionazin = O,O-Diethyl-O-(2-pyrazinyl)-thiophosphat.

Diese OP-Derivate sind aus der Literatur hinlänglich bekannt.

Ein weiterer Gegenstand vorliegender Erfindung betrifft Verfahren zur Gewinnung einer solchen nematiziden Wirkstoffkombination, die dadurch gekennzeichnet sind, dass Pflanzenwurzeln, die mit P.penetrans-infizierten Nematoden-Weibchen besetzt sind, durch Einwirkung eines wurzelauflösenden Enzyms behandelt und dass aus dem so erhaltenen Suspensionskonzentrat die Weibchen in geeigneter Weise entfernt werden, dass ferner aus diesen Weibchen durch Homogenisieren eine Sporensuspension gewonnen wird, die in feuchter oder getrockneter Form mit einer nematizid wirkenden Organophosphor-Verbindung gemäss Gruppe b) vermischt wird, wobei wahlweise Trägerstoffe zugesetzt werden können.

Als geeignetes Enzym kommen Cellulasen, besonders aber Pektinase in Frage.

Ein weiterer Gegenstand vorliegender Erfindung betrifft auch eine einfachere Variante des vorstehend genannten Verfahrens und ist dadurch gekennzeichnet, dass Pflanzenwurzeln, die mit P.penetrans-infizierten Nematoden-Weibchen besetzt sind, gewaschen, getrocknet und zu einem Pulver zerrieben werden, das in trockener oder feuchter Form mit einer nematizid wirkenden Organophosphor-Verbindung gemäss Gruppe b) vermischt wird, wobei wahlweise Trägerstoffe zugesetzt werden können.

Ein weiterer Gegenstand vorliegender Erfindung ist ein Verfahren zur Bekämpfung von Pflanzennematoden oder zur Verhütung von Nematodenbefall durch die kombinierte Anwendung der unter a) genannten Pasteuria penetrans-Sporen gleichzeitig oder nacheinander mit einem der unter b) genannten Organophosphor-Derivate in dem zu schützenden Boden oder an den zu schützenden Pflanzen bzw. Pflanzenteilen.

Die Mittel bzw. die kombinierten Anwendungen erzielen auf ganz unerwartete Weise eine synergistisch gesteigerte Wirkung. Bevorzugt sind Kombinationen, bei denen die Anteile von a : b sich wie 5 : 1 bis 1 : 5, bevorzugt 1,5 : 1 bis 1 : 1,5, verhalten, bezogen auf die Gewichtsanteile von Sporen und von OP-Derivat.

Wie oben ausgeführt, kann der Mikroorganismus im Regelfall in Form seines aufbereiteten natürlichen Nährmediums eingesetzt werden, in welchem Zerfallsprodukte seiner Umwelt wie Wurzelgallen, Nematodenreste und Pflanzenteile als Beimengungen enthalten sind. Dies hat zur Folge, dass in einem solchen Falle die Menge wirksamer Sporen nicht gewichtsmässig zu erfassen ist, sondern anhand ihrer Wirkungshöhe von Charge zu Charge bestimmt und standardisiert werden muss.

Der Mikroorganismus kann aber auch in Form einer reinen Sporensuspension gewonnen werden, von der die Nebenbestandteile durch Filtration und/oder Zentrifugieren abgetrennt worden sind. Solche Suspensionen können 1000 bis 1 Million Sporen pro ml oder mehr enthalten. In der verdünnten Anwendungskonzentration zur Penetration des Erdbodens lassen sich beispielsweise 10-1000 Sporen pro ml Sprühflüssigkeit verwenden.

Die Sporen von P. penetrans können zusammen mit dem jeweiligen Organophosphor-Nematizid als Granulat, als feste Formulierung (Staub oder Spritzpulver) oder als flüssige Formulierung (Dispersion, Gel, Emulsionskonzentrat) anwendungsbereit gemacht werden. Beide Wirkstoffe-Anteile a) oder b) des erfindungsgemässen Mittels können auch getrennt voneinander formuliert und kurz vor der Anwendung zusammengebracht oder separat angewendet werden. Die P. penetrans-Sporen können samt ihren natürlichen Beimengungen verwendet werden, können also unformuliert bleiben. Sie können aber auch formuliert werden, wobei Spritzpulver- oder Emulsionskonzentrat-Formulierungen sehr vorteilhaft sind.

Die Sporen können auch als Samenbeizung auf das Vermehrungsgut der zu schützenden Kulturpflanze aufgebracht werden. Dies kann z.B. als trockene Samenbeizung, als Nassbeizung, als Pillierung, als Pillierung oder als Gel-Inkapsulierung mit dem Samen oder Sämling geschehen.

Für die Wirkstoffgemische aus den Komponenten a) und b) kommen als Lösungsmittel in Frage: Alkohole, Glykole und Glycerin sowie deren Ether und Ester, wie Ethanol, Ethylenglykol, Ethylenglykolmonomethyl- oder -ethylether, Ketone wie Cyclohexanon, polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Darüberhinaus kann eine Vielzahl von vorgranulierten Materialien anorganischer oder organischer Natur wie insbesondere zerkleinerte Pflanzenrückstände verwendet werden.

Als oberflächenaktive Verbindungen kommen je nach Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäusre zu erwähnen.

Häufiger werden jedoch sog. synthetische Tenside verwendet, insbesondere Fettsulfonate, Fettsulfate, sulfonierte Benzimidazolderivate oder Alkylsulfonate.

Ferner kommen auch entsprechende Phosphate wie z.B. Salze des Phosphorsäureesters eines p-Nonylphenol-(4-14)-Ethylenoxyd-Adduktes in Frage.

Als nichtionische Tenside kommen in Erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Bei den kationischen Tensiden handelt es sich vor allem un quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi(2-chlorethyl)ethylammoniumbromid.

Die in der Formulierungstechnik gebräuchlichen Tenside sind u.a. in folgenden Publikationen beschrieben:

"Mc Cutcheon's Detergents and Emulsifiers Annual" BC Publishing Corp., Ringwood New Jersey, 1980
Sisely and Wood, "Encyclopedia of Surface Active Agents", Chemical Publishing Co., Inc. New York, 1980.

Bei den folgenden Mengenangaben wird immer auf eine Standardmenge P. penetrans Pulver oder OP-Verbindung bezogen, die im Lebensbereich des Gallen-Nematoden meloidogyne incognita an den Wurzeln der Wirtspflanzen eine Gallenreduktion von 30 % bewirkt.

Formulierungsbeispiele

| Spritzpulver | A | B | C |
|---|---|---|---|
| Wirkstoffgemisch bestehend aus einer Standardmenge P. penetrans und einer 1,5-fachen Standardmenge A) Isazofos oder B) Fensulfothionat oder C) Thionazin | 25% | 50% | 75% |
| Na-Ligninsulfonat | 5% | 5% | – |
| Na-Laurylsulfat | 3% | – | 5% |
| Na-Diisobutylnaphthalinsulfonat | – | 6% | 10% |
| Octylphenolpolyethylenglykolether (7–8 Mol Ethylenoxid) | – | 2% | – |
| Hochdisperse Kieselsäure | 5% | 10% | 10% |
| Kaolin | 62% | 27% | – |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Umhüllungsgranulat | |
|---|---|
| Wirkstoffgemisch bestehend aus einer Standardmenge P. penetrans und einer 5-fachen Standardmenge Ethoprophos oder Fosthietan | 3% |
| Polyethylenglykol (Molgew. 200) | 3% |
| Kaolin | 94% |

Der fein gemahlene Wirkstoffe wird in einem Mischer auf das mit Polyethylenglykol angefeuchtete Kaolin gleichmässig aufgetragen. Auf diese Weise erhält man staubfreie Umhüllungs-Granulate.

| Suspensionskonzentrat | |
|---|---|
| Wirkstoffgemisch bestehend aus einer Standardmenge P. penetrans und einer Standardmenge Dichlofenthion oder Diamidafos oder Fenamiphos | 40% |
| Ethylenglykol | 10% |
| Nonylphenolpolyethylenglykolether (15 Mol Ethylenoxid) | 6% |
| N-Ligninsulfonat | 10% |
| Carboxymethylcellulose | 1% |
| 37%ige wässrige Formaldehyd-Lösung | 0,2% |
| Silikonöl in Form einer 75%igen wässrigen Emulsion | 0,8% |
| Wasser | 32% |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Methodik der Gewinnung von P. penetrans-Inoculm

In einen Blumentopf wird leichte Gartenerde gegeben, die mit P.penetrans-Sporen und infektiösen Meloidogyne incognita-Larven gemischt ist, und ein Tomatenpflänzchen dorthinein gepflanzt.
Nach 8 - 12 Wochen werden die mit Gallen übersäten Wurzeln dem Topf entnommen, gewaschen und luftgetrocknet. Die in den Gallen herangereiften Meloidogyne-Weibchen sind mit P. penetrans-Sporen gefüllt (bis zu 2 Millionen Sporen/Weibchen).

Die getrockneten Wurzeln werden zu einem groben Pulver zerrieben und homogenisiert. Dabei werden die trockenresistenten P. penetrans-Sporen aus den zerriebenen Nematoden herausgetrennt. Sie bilden zusammen mit dem Wurzelmaterial, das als Trägermaterial dient, das Inoculum.

Ein Inoculum dieser Art wird im folgenden Versuch verwendet.

Biologischer Versuch

In leichte Gartenerde mit vorwiegendem Sandanteil werden Eier des Wurzelgallennematoden M. incognita eingemischt sowie eine solche Menge an P. penetrans-Inoculum, die bei der Standardisierung eine 30%ige Gallenreduktion an befallenen Tomatenpflanzen bewirkt. Die Bakteriumsporen heften sich an die geschlüpften Nematodenlarven.

In die so vorbereitete Erde wird eine gesunde Tomatenpflanze gesetzt und vier Wochen unter Normalbedingungen wachsen gelassen. Danach wird ihr Wurzelsysem durch Auszählen der entstandenen Nematodengallen ausgewertet.

In einem Parallelversuch wird in ebenfalls nematodeninfiziertem Sandboden eine entsprechende Menge OP-Nematizid eingemischt, die eine Reduktion des Nematodenbefalls um etwa 30 % ergibt. Die dazu benötigte nematizid konzentration im Sand richtet sich nach der individuellen Aktivität des eingesetzten Nematizids und schwankt zwischen 0.5 und 1.5 ppm.

Werden beide Kontrollagenzien, a) P. penetrans und b) das OP-Nematizid in den bezeichneten Mengen zusammen in nematodeninfizierten Sand gemischt, so ergibt sich überraschend eine Reduktion des Nematodenbefalls um etwa 90 %. Dieses entspricht signifikant mehr als dem additiven Effekt beider Agenzien.

Unter den geprüften OP-Derivaten Ethoprophos, Dichlofenthion, Diamidafos, Fenamiphos, Fensulfothion, Fosthietan, Isazofos und Thionazin zeichnen sich, im Gemisch mit P. penetrans-Sporen, durch ihre auch in Wiederholungsversuchen beständige Dauerwirkung von 90 % Abtötung und mehr die Präparate Ethoprophos, Isazofos und Fenamiphos besonders aus.

**Patentansprüche**

1. Mittel mit synergistisch gesteigerter Wirkung zur Bekämpfung von Pflanzennematoden enthaltend als Komponente a) Pasteuria penetrans-Sporen und als Komponente b) ein Organophosphor-Nematizid ausgewählt aus O-Ethyl-S,S-dipropylphosphorodithioat, O-Ethyl-O-(3-methyl-4-methylthiophenyl)-N-isopropyl-phosphorsäureamid, und O-(5-Chloro-1-isopropyl-1H-1,2,4-triazol-3-yl)-O,O-diethylphosphorothioat zusammen mit einem geeigneten Trägermaterial.

2. Mittel gemäß Anspruch 1, dadurch gekennzeichnet, daß die Komponenten a) und b) in einem Mengenverhältnis von 5:1 bis 1:5 vorliegen.

3. Mittel gemäß Anspruch 1, dadurch gekennzeichnet, daß die Komponenten a) und b) in einem Mengenverhältnis von 1,5:1 bis 1:1,5 vorliegen.

4. Mittel gemäß Anspruch 1, dadurch gekennzeichnet, daß als Komponente a) die Pasteuria penetrans-Sporen als getrocknetes Nährmedium mit ihren natürlichen Beimengungen vorliegen.

5. Mittel gemäß Anspruch 1, dadurch gekennzeichnet, daß als Komponente a) die P. penetrans-Sporen als fast reines Sporenpulver vorliegen.

6. Mittel gemäß Anspruch 1, dadurch gekennzeichnet, daß als Komponente a) die P. penetrans-Sporen mit den Resten eines flüssigen Aufbereitungsmediums vermischt vorliegen.

7. Verfahren zur Gewinnung einer nematiziden Wirkstoffkombination gemäß Anspruch 1, dadurch gekennzeichnet, daß Pflanzenwurzeln, die mit P. penetrans-infizierten Nematoden-Weibchen besetzt sind, durch Einwirkung eines wurzelauflösenden Enzyms behandelt und daß aus dem so erhaltenen Suspensionskonzentrat die Weibchen in geeigneter Weise entfernt werden, daß ferner aus diesen Weibchen durch Homogenisieren eine Sporensuspension gewonnen wird, die in feuchter oder getrockneter Form mit einer nematizid wirkenden Organophosphor-Verbindung gemäß Gruppe b) vermischt wird, wobei wahlweise Trägerstoffe zugesetzt werden können.

8. Verfahren gemäß Anspruch 7, dadurch gekennzeichnet, daß Pflanzenwurzeln, die mit P. penetrans-infizierten Nematoden-Weibchen besetzt sind, gewaschen, getrocknet und zu einem Pulver zerrieben werden, das in trockener oder feuchter Form mit einer nematizid wirkenden Organophosphor-Verbindung gemäß Gruppe b) vermischt wird, wobei wahlweise Trägerstoffe zugesetzt werden können.

9. Verfahren zur Bekämpfung von Pflanzennematoden oder zur Verhütung von Nematodenbefall, dadurch gekennzeichnet, daß zur Erzielung einer synergistisch gesteigerten Wirkung eine Zubereitung von Pasteuria penetrans-Sporen und ein Organophosphor-Nematizid ausgewählt aus O-Ethyl-S,S-dipropylphosphorodithioat, O-Ethyl-O-(3-methyl-4-methylthiophenyl)-N-isopropyl-phosphorsäureamid, und O-(5-Chloro-1-isopropyl-1H-1,2,4-triazol-3-yl)-O,O-diethylphosphorothioat gleichzeitig oder zeitlich versetzt mit dem zu schützenden Boden oder mit den zu schützenden Pflanzen bzw. Pflanzenteilen in Kontakt gebracht werden.

10. Verfahren gemäß Anspruch 9, dadurch gekennzeichnet, daß das Vermehrungsgut der Pflanzen behandelt wird.

## Claims

1. An agent having a synergistically increased action for controlling plant nematodes, containing as component a) Pasteuria penetrans spores and as component b) an organophosphorus nematicide selected from the group comprising O-ethyl S,S-dipropylphosphorodithioate, O-ethyl O-(3-methyl-4-methylthiophenyl) N-isopropylphosphoramidate and O-(5-chloro-1-isopropyl-1H-1,2,4-triazol-3-yl) O,O-diethylphosphorothioate together with a suitable carrier material.

2. An agent according to claim 1, which contains components a) and b) in a ratio of 5:1 to 1:5.

3. An agent according to claim 1, which contains components a) and b) in a ratio of 1.5:1 to 1:1.5.

4. An agent according to claim 1, which contains as component a) the Pasteuria penetrans spores in the form of a dry nutrient medium with their natural secondary components.

5. An agent according to claim 1, which contains as component a) the P. penetrans spores in the form of an almost pure spore powder.

6. An agent according to claim 1, which contains as component a) the P. penetrans spores in admixture with the residues of a liquid concentrating medium.

7. A method of preparing a nematicidal active compound combination according to claim 1, which comprises treating the roots of plants populated with female nematodes infected with P. penetrans by the action of a root-dissolving enzyme and removing the females from the resultant suspension concentrate in suitable manner, and further preparing a spore suspension from these females by homogenisation, which spore suspension is mixed in the moist or dry state with a nematicidally active organophosphorus compound of group b), and adding optional carriers.

8. A method according to claim 7, which comprises washing, drying and comminuting to a powder plant roots which are populated with female nematodes infected with P. penetrans, mixing said powder in the dry or moist state with a nematicidally active organophosphorus compound of group b), and adding optional carriers.

9. A method of controlling plant nematodes, or of preventing attack by nematodes, which comprises applying a preparation of Pasteuria penetrans spores and an organophosphorus nematicide selected from the group comprising O-ethyl S,S-dipropylphosphorodithioate, O-ethyl O-(3-methyl-4-methylthiophenyl)-N-isopropylphosphoramidate and O-(5-chloro-1-isopropyl-1H-1,2,4-triazol-3-yl) O,O-diethylphosphorothioate, simultaneously or in succession, to the soil or to the plants or plant parts to be protected, to achieve a synergistically increased action.

10. A method according to claim 9, which comprises treating propagation parts of the plants.

## Revendications

1 - Produit à activité synergétique pour la lutte contre les nématodes des végétaux, contenant en tant que composant a) des spores de Pasteuria penetrans et en tant que composant b) un nématocide organophosphoré choisi parmi les suivants : phosphorodithioate d'O-éthyle et de S,S-dipropyle, O-éthyl-O-(3-méthyl-4-méthylthiophényl)-N-isopropyl-phosphoramide, et phosphorothioate d'O-(5-chloro-1-isopropyl-1H-1,2,4-triazole-3-yle) et de O,O-diéthyle, avec un véhicule approprié.

2 - Produit selon la revendication 1, caractérisé en ce que les composants a) et b) sont présents dans des proportions relatives de 5:1 à 1:5.

3 - Produit selon la revendication 1, caractérisé en ce que les composants a) et b) sont présents dans des proportions relatives de 1,5:1 à 1:1,5.

4 - Produit selon la revendication 1, caractérisé en ce que le composant a) consiste en les spores de Pasteuria penetrans à l'état de milieu nutritif séché apportant ses impuretés naturelles.

5 - Produit selon la revendication 1, caractérisé en ce que le composant a) consiste en spores de P. penetrans à l'état de poudre de spores presque pure.

6 - Produit selon la revendication 1, caractérisé en ce que le composant a) consiste en spores de P. penetrans mélangées avec les résidus d'un milieu de préparation liquide.

7 - Procédé pour la préparation d'une combinaison de substances actives nématocides selon la revendication 1, caractérisé en ce que l'on traite des racines de végétaux infestées par des nématodes femelles infectés par P. penetrans par action d'une enzyme dégradant les racines, on sépare du concentré en suspension ainsi obtenu les femelles par un moyen approprié, on forme à partir de ces femelles, par homogénéisation, une suspension de spores qu'on mélange à l'état humide ou séché avec un composé organophosphoré à activité nématocide du groupe b) en ajoutant si on le désire des véhicules.

8 - Procédé selon la revendication 7, caractérisé en ce que l'on lave des racines de végétaux infestées par des nématodes femelles infectés par P. penetrans, on les sèche et on les broie en poudre qu'on mélange à l'état séché ou à l'état humide avec un composé organophosphoré à activité nématocide du groupe b), en ajoutant si on le désire des véhicules.

9 - Procédé pour combattre les nématodes des végétaux ou pour prévenir une attaque par les nématodes, caractérisé en ce que, pour parvenir à une activité synergétique, on met en contact, simultanément ou alternativement, avec le sol à protéger ou avec les végétaux ou parties de végétaux à protéger, une préparation de spores de Pasteuria penetrans et un nématocide du type organophosphoré choisi parmi les suivants : phosphoro-dithioate d'O-éthyle et de S,S-dipropyle, O-éthyl-O-(3-méthyl-4-méthylthiophényl)-N-isopropyl-phosphoramide et phosphorothioate d'O-(5-chloro-1-isopropyl-1H-1,2,4-triazole-3-yle).

10 - Procédé selon la revendication 9, caractérisé en ce que l'on traite des organes de multiplication de la plante.